# EUROPEAN PATENT SPECIFICATION

(11) **EP 2 897 886 B1**
(45) Date of publication and mention of the grant of the patent: **25.10.2017**
(21) Application number: 12768715.0
(22) Date of filing: 24.09.2012
(51) Int. Cl.: B65D 85/60, B65D 51/24, A23G 1/50

(54) **CONTAINER FOR RECEIVING AND SPLITTING PRODUCT PLATES ALONG WEAKENING GROOVES, USE OF SAID CONTAINER FOR RECEIVING AND SPLITTING PRODUCT PLATES, A PROCESS FOR SPLITTING PRODUCT PLATES, AND PRODUCT PLATES, IN PARTICULAR CHOCOLATE BARS**
BEHÄLTER ZUR AUFNAHME UND SPALTUNG VON PRODUKTPLATTEN ENTLANG SCHWÄCHUNGSRILLEN, VERWENDUNG DIESER BEHÄLTER ZUR AUFNAHME UND SPALTUNG VON PRODUKTPLATTEN, VERFAHREN ZUR SPALTUNG VON PRODUKTPLATTEN UND PRODUKTPLATTEN, INSBESONDERE SCHOKOLADETAFELN
RÉCIPIENT POUR RECEVOIR ET SÉPARER DES PLAQUES DE PRODUIT LE LONG DE RAINURES D'AFFAIBLISSEMENT, UTILISATION DUDIT RÉCIPIENT POUR RECEVOIR ET SÉPARER DES PLAQUES DE PRODUIT, PROCÉDÉ DE SÉPARATION DE PLAQUES DE PRODUIT, ET PLAQUES DE PRODUIT, EN PARTICULIER BARRES DE CHOCOLAT

(43) Date of publication of application: 29.07.2015
(73) Proprietor: Red Bull GmbH, 5330 Fuschl am See (AT)
(72) Inventor: NACHBAGAUER, Josef, A-5400 Hallein (AT); RINDERER, Matthias, A-5330 Fuschl am See (AT); GÖHLER, Lydia, A-5020 Salzburg (AT)
(74) Representative: Metten, Karl-Heinz
(86) International application number: PCT/EP2012/003986
(87) International publication number: WO 2014/044289

(56) References cited:
- CH-B1- 698 367
- DE-A1- 3 532 257
- DE-A1- 19 819 216
- DE-U1- 9 300 165
- GB-A- 2 364 522
- LU-A- 35 943
- US-A1- 2010 005 978

## Description

The present invention refers to a container for receiving and splitting product plates, in particular chocolate bars, along weakening grooves, use of a container for receiving and splitting product plates, in particular of chocolate bars, along weakening grooves, a process for splitting product plates, in particular chocolate bars, along weakening grooves and product plates, in particular chocolate bars.

Confectionery such as chocolate is frequently provided in the form of product plates which need to be broken into individual pieces for consumption. Quite often these products have a rather greasy skin or paste-like consistency in particular at higher temperatures, for example when held between fingers tips for a longer period of time. As a consequence, the fingers of the user become dirty and need to be cleaned in order to avoid affecting as well clothes or other objects, in particular when such chocolate bars need to be broken into individual pieces. As precautionary measure such product plates are usually safely packed in, for example, an extra plastic or aluminium sheet. This, however, requires apart from additional material needed for packaging also another packaging step. Moreover, if product plates are broken when still kept in such flexible plastic sheet or aluminium foil there is the risk of crumbs being formed when separating the product plates into individual pieces which will fall out of the opened package and spoil the clothes of the user and/or the floor.

It has therefore been an object of the present invention to provide means for safely storing and transporting product plates which can be separated into individual pieces without the risk of staining or soiling the user. An example for a container for receiving and splitting tablets is known from DE3532257. The problem underlying the present invention has been solved by a filled container, according to claim 1. The container of the present invention can, for example, represent a so-called clic-clac box comprising a multitude of product plates arranged in stack.

In one embodiment of the invention the upper part of said container, in particular said container lid, and/or the lower part of said container, in particular said container bottom, comprises or is made of plastic and/or metal, in particular plastic and/or metal sheets. Plastic or metal sheets are usually provided with a certain degree of resiliency and can, thus, be deflected upon application of force on the said sheets. Said multitude of product plates arranged in stack of, for example, two or three or more product plates, represent in one embodiment edible product plates such as chocolate bars. Product plates in the meaning of the present invention can also encompass, for example, those made of starch, lard, lighter, e.g. charcoal lighter, confectionary, or soap.

In a useful embodiment of the present invention at least two, in particular all, product plates are essentially identical in terms of length and/or width and/or diameter and/or thickness.

The stack of product plates usually is arranged in a manner that all product plates are placed exactly on top of each other so that if all product plates have the same size and shape there is no excess length.

Another useful embodiment of the present invention also provides that at least two, in particular all, product plates exhibit essentially identical weakening grooves with respect to cross-sectional shape and/or length and/or pattern of arrangement. Weakening grooves are in one embodiment of the present invention embedded in the upper side of the product plates. In this manner in stack of product plates weakening grooves are regularly not facing towards each other.

In a practicable mode of carrying out of the present invention the product plates exhibit an essentially polygonal, e.g. rectangular or square basic form, or a circular or oval basic form.

Those containers of the present invention are preferred in which at least two, in particular all weakening grooves have at least one crossing point, in particular in the center of the basic form of the product plates, or that all weakening grooves cross each other in one, in particular central, crossing area of the basic form.

With another useful embodiment of the container of the present invention it is provided that said first side wall and/or said first rim comprise or represent a first holding means and/or that said second side wall and/or said second rim comprise or represent a second holding means.

Those containers of the present invention have been found to be advantageous in which the upper part of the container closes the container in said first position and unblocks said container in said second position, wherein in said first position said first side wall and/or said first rim and/or said first holding means exhibits a form closure with said lower part of the container, in particular with said second side wall and/or said second rim and/or said second holding means,
that said upper part of the container can be transferred from said first to said second position upon a first deflection, in particular of said first operating area, in the direction of the interior of said container, in particular along its longitudinal axis, so that said form closure is, in particular reversibly, released,
and/or that the lower part of the container closes said container in a first position and unblocks said container in said second position, wherein in said first position said second side wall and/or said second rim and/or said second holding means exhibit a form closure with said upper part of the container, in particular with its first side wall and/or first rim and/or said first holding means, and that said lower part of the container can be transferred from said first into said second position upon a second deflection, in particular of said second operating area, in the direction of the interior of said container, in particular along its longitudinal axis, so that the form closure is, in particular reversibly, released.

This embodiment of the container of the present invention is usually also known as an example of a so-called clic-clac box. However, this clic-clac box may have a variety of different designs. However, the containers of the present invention having said characteristics of a clic-clac box are preferably suited.

According to another embodiment of the invention a container is provided in which said first operating area represents or comprises the central part of the container lid and/or that said second operating area represents or comprises the central part of the bottom of the container.

According to a particularly practical embodiment of the container of the present invention it is provided that said first deflection extends over, i.e. lies within, at least said first deflection range and/or that said second deflection extends at least over, i.e. lies within, said second deflection range. Although being also possible it is not necessary that said first deflection has to extend beyond said first deflection range and/or that said second deflection has to extend beyond said second deflection range. As long as said first or second deflection lie within said first and second deflection ranges, respectively, it is safeguarded that the product plate or plates can be separated into individual pieces along said weakening lines. Thus, in this regard it is also preferred that upon deflecting said container lid, in particular said first operating area, in the direction of the interior of said container, in particular along its longitudinal axis, over said first deflection range, in particular up to said first deflection maximum,
or
that upon deflecting said container bottom, in particular said second operating area, in the direction of the interior of said container, in particular along its longitudinal axis, over said second deflection rang, in particular up to said second deflection maximum, or that upon deflecting said container lid, in particular said first operating area, in the direction of the interior of said container, in particular along its longitudinal axis, over said first deflection range, in particular up to said first deflection maximum, and that upon deflecting said container bottom, in particular said second operating area, in the direction of the interior of said container, in particular along its longitudinal axis, over said second deflection rang, in particular up to said second deflection maximum,
at least one product plate, in particular all product plates, are separable or separated into individual pieces along at least one, in particular essentially all of the weakening grooves.

Further, in a very useful embodiment of the present invention said first operating area has at least a partial overlap with the area in which the weakening grooves of one, several or all product plates cross each other, and/or that said second operating area has at least a partial overlap with the area in which the weakening grooves of one, several or all product plates cross each other.

Splitting of product plates, in particular chocolate bars, can be conveniently accomplished with the containers of the present invention if care is taken that the area in which the weakening grooves cross each other have at least a partial overlap with the center of the basic form of the product plates.

This also applies to container of the present invention in which the crossing areas, in particular when located in the central area of the basic form, of the weakening grooves of adjacent product plates, in particular of all product plates, in a stack are essentially arranged in an overlapping manner.

Those containers of the present invention have found to furnish particularly reliable results in which said at least one weakening groove, in particular all weakening grooves, of adjacent, in particular all, product plates in a stack are arranged essentially in overlapping manner.

In the useful embodiment of the present invention it is provided that the basic form of said container and the basic form of the product plates, in particular of said stack of product plates, is essentially identical.

In this regard it is also of advantage when the dimension of the basic form of said product plates, in particular the dimension of the stack of product plates, is, in particular slightly, smaller than the dimension of the basic form of the container.

In one embodiment the weakening grooves of the product plates kept in the container of the present invention are straight-lined and are crossing each other only once, preferably in the center of the basic form of the product plate thereby yielding separable, individual pieces of said product plate which exhibit a triangular-like basic shape or the shape of the segment of a circle, depending on the basic form of the product plate.

It has been also found to be practical to include protective layers between adjacent product plates and/or between a lid in the upper product plate and/or the bottom and the lowest product plate in a stack. In this regard it has been found to be preferable that the first and/or third protective layer, in particular first and third protective layer, represent or comprise a paper sheet and/or that said second and/or said third protective layer, in particular only said second protective layer, represents or comprises a padded or cushioned layer, in particular a paper padded layer.

Another variant of the container of the present invention, in particular in the embodiment of a clic-clac box, is characterized in that upon applying pressure to said first side wall, said first rim and/or said first holding means on opposite sides thereof said first side wall and/or said first rim and/or said first holding means acquire a form closure with the lower part of the container, in particular with its second side wall and/or its second rim and/or its second holding means, thereby transferring the container from the open, second position into the closed, first position.

In order to arrive at an improved interplay between container and product plate or product plates it has been found to be advantageous that the dimension of the basic form of the container and the dimension of the basic form of the single product plate or stack of product plates provide a clearance so that upon deflection of the upper part, in particular of the container lid, and/or the lower part, in particular of the container bottom, lateral movement of the individual pieces split along their weakening grooves is enabled. Furthermore, suitable containers according to the invention are characterized in that the flanks of said weakening grooves are tilted and are forming on average an angle in the range of 5° to 60°, in particular in the range of 25° to 45°, and more particular in the range of 30° to 40°, and/or that the largest width of the weakening grooves is on average in the range of 3 to 9 millimeter, in particular in the range of 4 to 8 mm, and more preferred in the range of 6 to 7 mm, and/or that the depth of weakening grooves is on average in the range of 2 to 6 mm, in particular in the range of 2,5 to 5 mm, and more preferred in the range of 3 to 4 mm, and/or that the thickness of the product plates is on average in the range of 8 to 20 mm, in particular in the range of 8 to 14 mm, and more preferred in the range of 10,5 to 12 mm, and/or that the diameter of a circular product plate is in the range of 50 to 150 mm, in particular in the range of 60 to 120 mm, and more preferred in the range of 70 to 100 mm.

In a preferred embodiment of a filled container according to the invention the depth of weakening grooves is on average from 10 to 60%, in particular from 20 to 50%, and more preferred from 25 to 45%, of the thickness of the product plate.

Moreover, the object underlying the present invention has also been solved by a process for splitting of product plates, in particular chocolate bars, according claim 18. In a preferred embodiment of the process it is provided that the distance between the container lid, in particular said first operating area, in the closed position of the container and the upper side of the single product plate or the distance between the container lid, in particular said first operating area, in the closed position of the container and the upper side of said upper product plate of said stack or the distance between the container lid, in particular said first operating area, in the closed position of the container and said second protective layer is smaller than said first deflection range or said first deflection maximum, in particular when the single product plate or the stack of product plates is resting on said container bottom or on said third protective layer, and/or it is provided that the distance between the container bottom, in particular between said second operating area, in the closed position of the container and the bottom side of the single product plate or the distance between the container bottom, in particular said second operating area, in the closed position of the container and the bottom side of the lowest product plate of said stack or the distance between the container bottom, in particular said second operating area, in the closed position of the container and said third protective layer is smaller than said second deflection range or said second deflection maximum, in particular when the single product plate or the stack of product plates is resting on said container lid or on said second protective layer,
or
it is provided that the sum of the distance between the container bottom, in particular between said second operating area, in the closed position of the container and the bottom side of the single product plate or the distance between the container bottom, in particular said second operating area, in the closed position of the container and the bottom side of the lowest product plate of said stack or the distance between the container bottom, in particular said second operating area, in the closed position of the container and said third protective layer and the distance between the container lid, in particular said first operating area, in the closed position of the container and the upper side of the single product plate or the distance between the container lid, in particular said first operating area, in the closed position of the container and the upper side of said upper product plate of said stack or the distance between the container lid, in particular said first operating area, in the closed position of the container and said second protective layer is smaller than the sum of said first and second deflection ranges or of the sum of said first and second deflection maxima.

It is also preferred in this regard that it is provided that upon deflecting said container lid, in particular said first operating area, in the direction of the interior of said container, in particular along its longitudinal axis, over said first deflection range, in particular up to said first deflection maximum,
or
that upon deflecting said container bottom, in particular said second operating area, in the direction of the interior of said container, in particular along its longitudinal axis, over said second deflection rang, in particular up to said second deflection maximum, or that upon deflecting said container lid, in particular said first operating area, in the direction of the interior of said container, in particular along its longitudinal axis, over said first deflection range, in particular up to said first deflection maximum, and that upon deflecting said container bottom, in particular said second operating area, in the direction of the interior of said container, in particular along its longitudinal axis, over said second deflection rang, in particular up to said second deflection maximum,
at least one product plate, in particular all product plates, are separated into individual pieces along at least one, in particular essentially all of the weakening grooves.

Further, the problem underlying the present invention has also been solved by a product plate, in particular chocolate bar, which can be split along weakening grooves into individual pieces, comprising a bottom side, a top side and a rim, wherein said bottom side and/or said upper side comprise at least two weakening grooves which extend from a first position of the rim to a second position of said rim wherein said weakening grooves cross each other, in particular only once and/or in the central part of the product plate.

Such product plates are preferred which comprise only one crossing area in which all weakening grooves cross each other.

A reliable splitting of said product plates into individual pieces is in particular accomplished in a very reliable manner when the weakening grooves with regard to their cross-sectional shape extend on average over of at least a third of the average thickness of the product plate. In general, it is preferred when the depth of weakening grooves is on average from 10 to 60%, in particular from 20 to 50%, and more preferred from 25 to 45%, of the thickness of the product plate.

In a very pragmatic embodiment said weakening grooves have a tapered cross-section from top to bottom. Moreover, it has been found to be a rather useful embodiment in which said crossing grooves are essentially straight lined. Generally, the product plate of the invention can have any basic form. But, in particularly useful embodiments of product plates according to the invention the basic form of said product plates is circular, oval or polygonal.

It has also been found that product plates in one embodiment are characterized in that the flanks of said weakening grooves are tilted and are forming on average an angle the range of 5 to 60°.

Further, product plates can be characterized in that the largest width of the weakening grooves is on average in the range of 3 to 9 millimeter, in particular in the range of 4 to 8 mm, and more preferred in the range of 6 to 7 mm, and/or that the depth of weakening grooves is on average in the range of 2 to 6 mm, in particular in the range of 2,5 to 5 mm, and more preferred in the range of 3 to 4 mm, and/or that the thickness of the product plates is on average in the range of 8 to 20 mm, in particular in the range of 8 to 14 mm, and more preferred in the range of 10,5 to 12 mm, and/or that the diameter of a circular product plate is in the range of 50 to 150 mm, in particular in the range of 60 to 120 mm, and more preferred in the range of 70 to 100 mm.

Particular, results have been obtained also width those product plates in which the crossing area of weakening grooves is broader than the width of said weakening grooves.

In one embodiment, also those products plates according to the invention are preferred in which at least one, in particular several or all separable individual pieces of said product plate formed by weakening grooves crossing each other have a smaller thickness adjacent to the crossing area than adjacent to the rim.

Splitting is also accomplished in a very reliable manner with those product plates in which at least one, in particular all crossing grooves have a smaller depth adjacent to the crossing area than adjacent to the rim.

A problem underlying the present invention has also been solved by a stack of product plates comprising at least two product plates according to the invention as outlined above. The longitudinal axis of the container of the present invention can be understood in the meaning of the present invention to represent said axis which extends from the upper part of the container, in particular the center of the upper part, in particular of the lid, to the lower part of the container, in particular the center of the lower part, in particular of the container bottom.

The filled container of the present invention offers varies advantages of over prior art packages. It not only serves the purpose to safely store and transport separable product plates such as chocolate bars but also enables the user to reliably transfer product plates into separated pieces which automatically have a proper size for consumption even without having opened the container. With the present invention unnecessary formation of crumbs can be reduced or even prevented. And, in case such crumbs will be formed upon splitting up said product plates these crumbs are safely kept in the lower part of the container so that there is no risk of soiling or staining ones clothes upon opening said container.

It has also been surprisingly found that a multitude of product plates such as chocolate bars when arranged in stack can be completely transferred into separate individual pieces by use of the container of the present invention. There is no need at all to touch the product plates with the fingers in order to separate these plates into individual pieces. Moreover, by opening the container that is, by removing a lid a means is provided for offering individual pieces for consumption in an aesthetically pleasing manner. That is, individual pieces are not arranged in an arbitrary manner, but are still well placed within the container. The present invention offers the additional advantage that it is not necessary to prepare small individual pieces and to fill these pieces into respective containers in a rather laborious manner. Instead, product plates can be prepared which can be loaded into said containers, even in the form of stacks, by use of an automatic process. Moreover, with the present invention the handling of single pieces in production and packaging can be circumvented and replaced in the interest of simplicity in production and packaging by product plates such as chocolate bars.

The invention, together with further objects and advantages, may be best understood, for example, with reference to the following description of the following embodiments taken with the accompanying drawings, in which
- Figure 1: shows a perspective view of a single chocolate bar
- Figure 2: shows a schematic top plan view of the chocolate bar according to figure 1 in a schematic drawing,
- Figure 3: shows a schematic side view of the chocolate bar according to figures 1 and 2,
- Figure 4: shows another schematic side view of the chocolate bar according to figures 1 and 2,
- Figure 5: shows a perspective view of the container of the present invention,
- Figure 6: shows a perspective view of the opened container of the present invention,
- Figure 7: shows the process step of pressing the container lid of the container of the present invention,

- Figure 8: shows an opened container of the present invention containing undivided chocolate bars, and
- Figure 9: shows an opened container of the present invention containing chocolate bars having been separated into individual pieces by the process according to the invention.

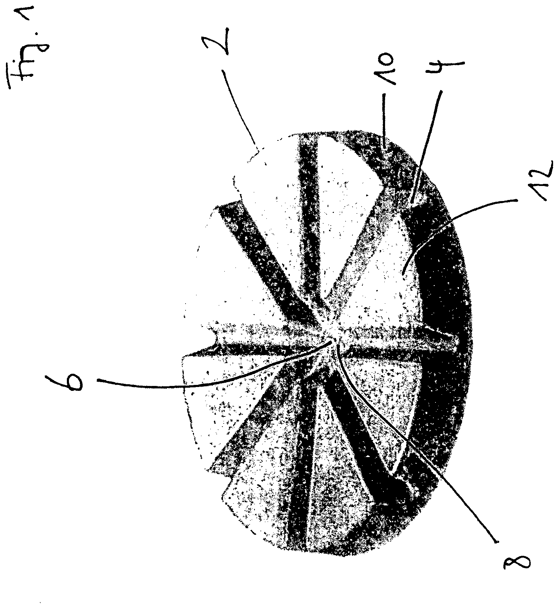

In figure 1 chocolate bar 2 is depicted which has a circular basic form and comprises in total four straight weakening grooves 4 which cross each other and a single crossing area 6 which is overlapping the center 8 of the basic form of the chocolate bar 2. The weakening grooves 4 extend from one side of the rim 10 of the chocolate bar 2 to the opposite rim portion of the chocolate bar. Said crossing weakening grooves 4 are creating segments of a circle 12 which can be separated according to the process of the present invention into individual pieces. With the chocolate bar 2 depicted in figure 1 said weakening grooves 4 have an essentially V-shaped cross-section.

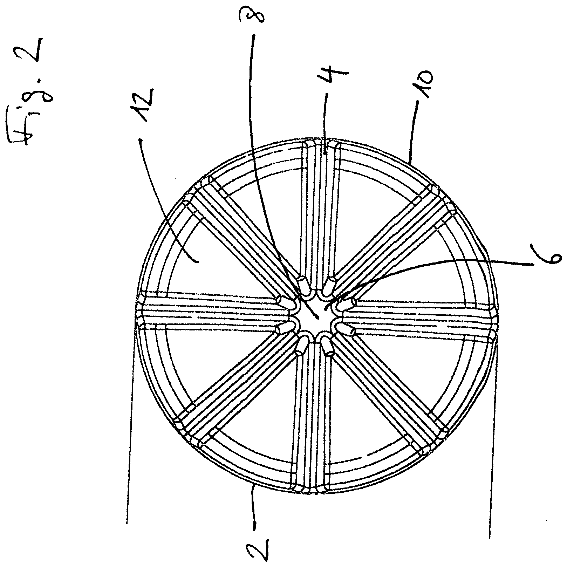

Figure 2 depicts a schematic top plan view of the chocolate bar according to figure 1. Weakening grooves 4 have the length of the diameter of the circular basic form of the chocolate bar 2.

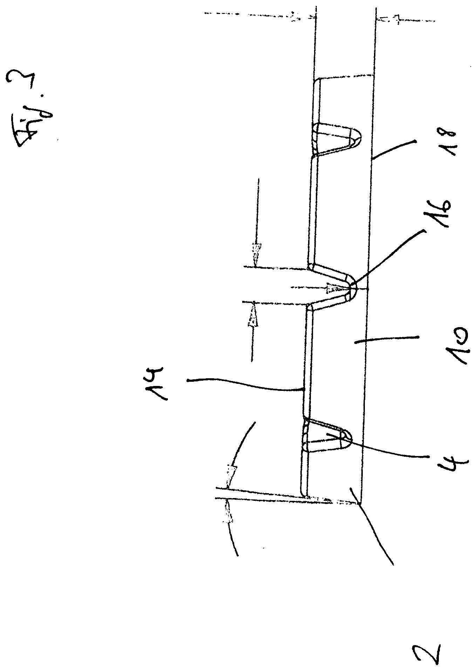

In figure 3 a schematic side view of the chocolate bar according to figures 1 and 2 is shown. The weakening grooves 4 have their largest width at the upper side 14 of the chocolate bar 2 and the smallest width adjacent to the trough 16. The circumferential rim 10 can be tilted slightly towards the center 8 from lower side 18 to upper side 14. The thickness of the chocolate bar 2 is determined as the range between the upper side 14 and lower side 18.

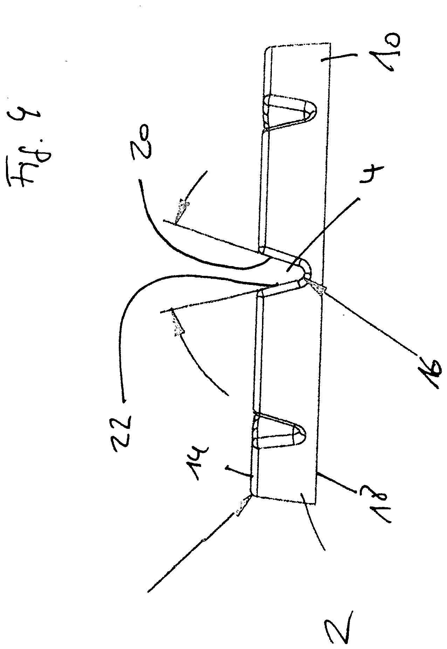

Figure 4 is essentially identical to figure 3. From figure 4 it can be derived that the flanks 20 and 22 of the weakening grooves 4 are slightly tapered outwards and therefore forming an angle.

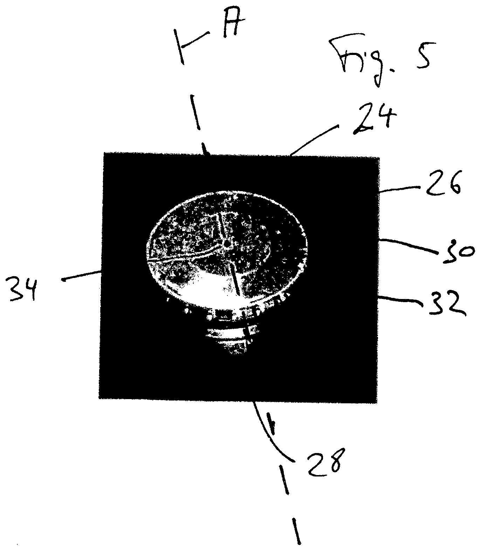

Figure 5 shows a container 24 of the present invention in closed position comprising an upper part 26 and lower part 28. The upper part 26 comprises a container lid 30 and rim or side wall 32. Figure 5 also shows a first operating area 34 in the center of the container lid 30. By use of a dashed line the longitudinal axis A is depicted.

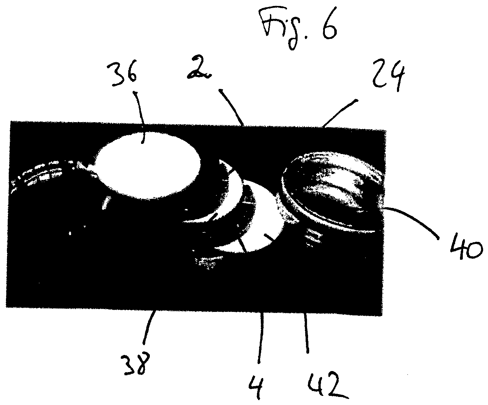

In figure 6 the container 24 of the present invention is shown together with product plates 2 in the form of chocolate bars being equipped with weakening grooves 4. In addition on top of the upper chocolate bar 2 a second protective layer 36 is placed, preferably in the form of a padded paper layer. Furthermore, between both chocolate bars 2 a first protective layer 38 in the form of a paper layer is placed, and between the lower chocolate bar 2 and the container bottom 40 a third protective layer 42 is placed.

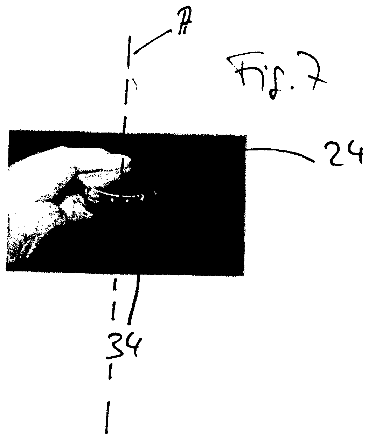

As can be derived from figure 7 upon applying pressure to the first operating area 34 of the container 24 according to the present invention the chocolate bars are split into individual pieces. Simultaneously the upper part 26 of the container is no longer locked to the lower part 28 of the container so that said container can be easily opened and its content offered for consumption. By use of a dashed line the longitudinal axis A is depicted.

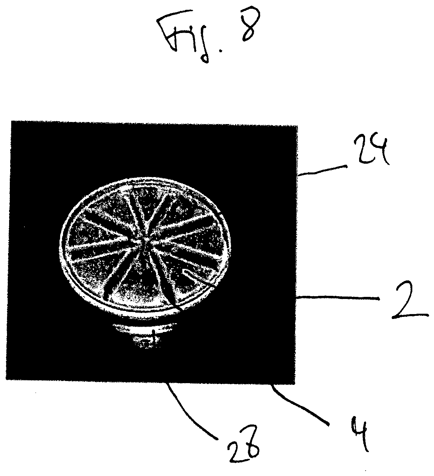

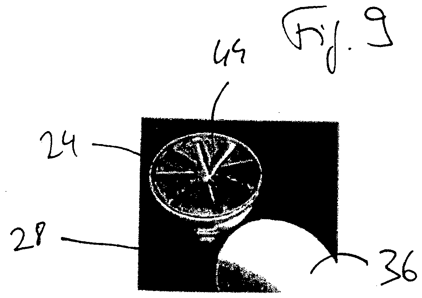

Figure 8 shows the container 24 of the present invention without its upper part 26. That is, the upper part 26 has been removed without pressing the container lid towards the interior of the container so that the chocolate bars 2 placed inside the lower part of the container are still in an undivided state. If pressure is applied to the container lid separated individual pieces 44 result as depicted in Figure 9.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description, the figures as well as the claims could be essential alone or in every combination for the realization of the invention in its different embodiments.

## Claims

1. Filled container (24),
in particular a box, for receiving and splitting a multitude of
product plates, in particular a multitude of chocolate bars (2),
at least one containing at
least one weakening groove (4),
said multitude of product plates being arranged in a
stack, said product plate or plates are adapted to be separated along said weakening groove or weakening grooves into separate pieces (44);
said container having a longitudinal axis (A);
wherein said container can be transferred from a closed, first position into an opened, second position;
said container comprising
an upper part comprising a container lid (30)
and, connected to said container lid, a first
side wall (32) having a first rim; and
a corresponding lower part (28) comprising a container bottom (40)
and, connected to said
container bottom, a second side wall having a second rim;
a multitude of product plates, inside said container, each having an upper side (14) and an opposite bottom side (18),
arranged in a stack, said product plates having, in particular
provided at their upper sides, at least one, in particular straight, weakening groove, in particular a multitude of weakening grooves;
wherein the upper side of said upper product plate or wherein the upper side of all product plates of the stack of product plates is/are directed towards the container lid and wherein the bottom side of the lowest product plate or the bottom side of all product plates of said stack is/are directed towards the container bottom;
optionally at least one first protective layer (38)
between adjacent product plates of said
stack and/or at least one second protective layer (36)
between the container lid and the
upper side of the upper product plate of said stack and/or at least one third protective layer (42)
between the bottom side of the lowest product plate in said stack and said be pressed when the container is in the closed position at least at one first operating area (34),
in particular along the longitudinal axis of said container, in the direction of the interior of said container to an extent of at least a first deflection range comprising a first deflection maximum, in particular in a reversible manner, and/or
wherein said lower part of the container is arranged and adapted, in particular with regard to form, thickness and/or material, in such a manner that its container bottom can be pressed when the container is in the closed position at least at one second operating area, in particular along the longitudinal axis of said container, in the direction of the interior of said container to an extent of at least a second deflection range comprising a second deflection maximum, in particular in a reversible manner; wherein the distance between the container lid, in particular said first operating area, in the closed position of the container and the upper side of said upper product plate of said stack or the distance between the container lid, in particular said first operating area, in the closed position of the container and said second protective layer is smaller than said first deflection range or said first deflection maximum, in particular when the stack of product plates is resting on said container bottom or on said third protective layer, and/or
wherein the distance between the container bottom, in particular said second operating area, in the closed position of the container and the bottom side of the lowest product plate of said stack or the distance between the container bottom, in particular said second operating area, in the closed position of the container and said third protective layer is smaller than said second deflection range or said second deflection maximum, in particular when the stack of product plates is resting on said container lid or on said second protective layer, and/or wherein
the distance between the container bottom, in particular said second operating area, in the closed position of the container and the bottom side of the lowest product plate of said stack or the distance between the container bottom, in particular said second operating area, in the closed position of the container and said third protective layer and the distance between the container lid, in particular said first operating area, in the closed position of the container and the upper side of said upper product plate of said stack or the distance between the container lid, in particular said first operating area, in the closed position of the container and said second protective layer is smaller than the sum of said first and second deflection ranges or of the sum of said first and second deflection maxima,
so that upon deflecting said container lid, in particular said first operating area, in the direction of the interior of said container, in particular along its longitudinal axis, and/or that upon deflecting said container bottom, in particular said second operating area, in the direction of the interior of said container, in particular along its longitudinal axis, at least one product plate, in particular all product plates, are separable or separated into individual pieces along at least one, in particular essentially all of the weakening grooves.

2. Container according to claim 1, **characterized in that** the upper part of said container, in particular said container lid, and/or the lower part of said container, in particular said container bottom, comprises or is made of plastic and/or metal, in particular plastic and/or metal sheets.

3. Container according to claim 1 or 2, **characterized in that** at least two, in particular all, product plates are essentially identical in terms of length and/or width and/or diameter and/or thickness.

4. Container according to any of the preceding claims, **characterized in that** at least two, in particular all, product plates exhibit essentially identical weakening grooves with respect to cross-sectional shape and/or length and/or pattern of arrangement.

5. Container according to any of the preceding claims, **characterized in that** at least two, in particular all weakening grooves of a product plate have at least one crossing area, in particular in the center of the basic form of the product plates, or that all weakening grooves of a product plate cross each other in one, in particular central, crossing area of the basic form.

6. Container according to any of the preceding claims, **characterized in that** said first side wall and/or said first rim comprise or represent a first holding means and/or that said second side wall and/or said second rim comprise or represent a second holding means.

7. Container according to any of the preceding claims, **characterized in that** the upper part of the container closes the container in said first position and unblocks said container in said second position, wherein in said first position said first side wall and/or said first rim and/or said first holding means exhibits a form closure with said lower part of the container, in particular with said second side wall and/or said second rim and/or said second holding means,
that said upper part of the container can be transferred from said first to said second position upon a first deflection, in particular of said first operating area, in the direction of the interior of said container, in particular along its longitudinal axis, so that said form closure is, in particular reversibly, released,
and/or that the lower part of the container closes said container in a first position and unblocks said container in said second position, wherein in said first position said second side wall and/or said second rim and/or said second holding means exhibit a form closure with said upper part of the container, in particular with its first side wall and/or first rim and/or said first holding means, and
that said lower part of the container can be transferred from said first into said second position upon a second deflection, in particular of said second operating area, in the direction of the interior of said container, in particular along its longitudinal axis, so that the form closure is, in particular reversibly, released.

8. Container according to any of the preceding claims, **characterized in that** upon deflecting said container lid, in particular said first operating area, in the direction of the interior of said container, in particular along its longitudinal axis, over said first deflection range, in particular up to said first deflection maximum, or that upon deflecting said container bottom, in particular said second operating area, in the direction of the interior of said container, in particular along its longitudinal axis, over said second deflection rang, in particular up to said second deflection maximum, or
that upon deflecting said container lid, in particular said first operating area, in the direction of the interior of said container, in particular along its longitudinal axis, over said first deflection range, in particular up to said first deflection maximum, and that upon deflecting said container bottom, in particular said second operating area, in the direction of the interior of said container, in particular along its longitudinal axis, over said second deflection rang, in particular up to said second deflection maximum,
at least one product plate, in particular all product plates, are separable or separated into individual pieces along at least one, in particular essentially all of the weakening grooves.

9. Container according to any of the preceding claims, **characterized in that** said first operating area has at least a partial overlap with the area in which the weakening grooves of one, several or all product plates cross each other, and/or that said second operating area has at least a partial overlap with the area in which the weakening grooves of one, several or all product plates cross each other.

10. Container according to claim 9, **characterized in that** the area in which the weakening grooves cross each other has at least a partial overlap with the center of the basic form of the product plate or plates.

11. Container according to any of claims 5 to 10, **characterized in that** the crossing areas, in particular when located in the central area of the basic form, of the weakening grooves of adjacent product plates, in particular of all product plates, in a stack are essentially arranged in an overlapping manner.

12. Container according to any of the preceding claims, **characterized in that** said at least one weakening groove, in particular all weakening grooves, of adjacent, in particular all, product plates in a stack are arranged essentially in overlapping manner.

13. Container according to any of the preceding claims, **characterized in that** the basic form of said container and the basic form of the product plates, in particular of said stack of product plates, is essentially identical.

14. Container according to any of the preceding claims, **characterized in that** the first and/or third protective layer represents or comprises a paper sheet and/or that said second and/or said third protective layer, in particular only said second protective layer, represents or comprises a padded or cushioned layer, in particular a paper padded layer.

15. Container according to any of the preceding claims, **characterized in that** the dimension of the basic form of the container and the dimension of the basic form of the stack of product plates provide a clearance so that upon deflection of the upper part, in particular of the container lid, and/or the lower part, in particular of the container bottom, lateral movement of the individual pieces split along their weakening groove or grooves is enabled.

16. Container according to any of the preceding claims, **characterized in that** the flanks (20, 22) of said weakening grooves are tilted and are forming on average an angle in the range of 5° to 60°, in particular in the range of 25° to 45°, and more particular in the range of 30° to 40°, and/or that the largest width of the weakening grooves is on average in the range of 3 to 9 mm, in particular in the range of 4 to 8 mm, and more preferred in the range of 6 to 7 mm, and/or that the depth of weakening grooves is on average in the range of 2 to 6 mm, in particular in the range of 2,5 to 5 mm, and more preferred in the range of 3 to 4 mm, and/or that the thickness of the product plates is on average in the range of 8 to 20 mm, in particular in the range of 8 to 14 mm, and more preferred in the range of 10,5 to 12 mm, and/or that the diameter of a circular product plate is in the range of 50 to 150 mm, in particular in the range of 60 to 120 mm, and more preferred in the range of 70 to 100 mm; and/or wherein the depth of weakening grooves is on average from 10 to 60%, in particular from 20 to 50%, and more preferred from 25 to 45%, of the thickness of the product plate.

17. Use of the container according to any of the preceding claims, in particular according to any of claims 7 to 16, for splitting a multitude of product plates, in particular chocolate bars, comprising weakening grooves into individual pieces said product plate or plates being kept in said container during said splitting process, said multitude of product plates being arranged in a stack.

18. Process for the splitting of a multitude of product plates, in particular chocolate bars, into individual pieces along weakening grooves in said product plates comprising: providing a container according to any of claims 1 to 16, for example a clic-clac box, placing a multitude of product plates, in particular a multitude of chocolate bars, at least one containing at least one, in particular at least two weakening grooves, said multitude of product plates being arranged in a stack, in said container or box, deflecting the upper part, in particular the lid, of said container or box, in particular in the first operating area, and/or deflecting the lower part, in particular the container bottom, of said container or box, in particular in said second operating area, in such a manner that said upper part of the container or box, in particular the container lid, is deflected in the direction of the interior of said container, in particular along its longitudinal axis, and/or in such a manner that the lower part of said container or box, in particular the container bottom of said container or box, is deflected in the direction of the interior of said container or box, in particular along its longitudinal axis, thereby splitting the product plates into individual pieces along said weakening grooves.

## Patentansprüche

1. Gefüllter Behälter (24), insbesondere eine Box, zur Aufnahme und Spaltung einer Mehrzahl von Produktplatten, insbesondere einer Mehrzahl von Schokoladentafeln (2), wovon zumindest eine(r) zumindest eine Schwächungsnut (4) enthält, wobei die Mehrzahl von Produktplatten in einem Stapel angeordnet ist, wobei die Produktplatte bzw. -platten angepasst sind, entlang der Schwächungsnut bzw. Schwächungsnuten in separate Stücke (44) geteilt zu werden;
wobei der Behälter eine Längsachse (A) aufweist;
wobei der Behälter aus einer geschlossenen ersten Position in eine geöffnete zweite Position gebracht werden kann;
wobei der Behälter Folgendes umfasst:
einen oberen Teil, der einen Behälterdeckel (30) und eine mit dem Behälterdeckel verbundene erste Seitenwand (32) mit einem ersten Rand umfasst, und einen entsprechenden unteren Teil (28), der einen Behälterboden (40) und eine mit dem Behälterboden verbundene zweite Seitenwand mit einem zweiten Rand umfasst;
eine Mehrzahl von Produktplatten innerhalb des Behälters, die jeweils eine Oberseite (14) und eine gegenüberliegende Unterseite (18) aufweisen und in einem Stapel angeordnet sind, wobei die Produktplatten zumindest eine insbesondere gerade Schwächungsnut, insbesondere eine Mehrzahl von Schwächungsnuten, aufweisen, die insbesondere an ihren Oberseiten bereitgestellt sind;
wobei die Oberseite der oberen Produktplatte oder die Oberseite aller Produktplatten des Produktplattenstapels dem Behälterdeckel zugewandt ist/sind und wobei die Unterseite der untersten Produktplatte oder der Unterseite aller Produktplatten des Stapels dem Behälterboden zugewandt ist/sind;
optional zumindest eine erste Schutzschicht (38) zwischen benachbarten Produktplatten des Stapels und/oder zumindest eine zweite Schutzschicht (36) zwischen dem Behälterdeckel und der Oberseite der oberen Produktplatte des Stapels und/oder zumindest eine dritte Schutzschicht (42) zwischen der Unterseite der untersten Produktplatte im Stapel und dem Behälterboden;
wobei die Mehrzahl von Produktplatten entlang der Schwächungsnuten in einzelne Stücke teilbar ist;
wobei der obere Teil des Behälters insbesondere im Hinblick auf Form, Dicke und/oder Material so angeordnet und angepasst ist, dass, wenn sich der Behälter in der geschlossenen Position befindet, sein Behälterdeckel an zumindest einem ersten Wirkungsbereich (34) insbesondere entlang der Längsachse des Behälters in der Richtung des Behälterinneren im Ausmaß zumindest eines ersten Durchbiegungsbereichs, der ein erstes Durchbiegungsmaximum umfasst, gedrückt werden kann, insbesondere in einer reversiblen Weise, und/oder
wobei der untere Teil des Behälters insbesondere im Hinblick auf Form, Dicke und/oder Material so angeordnet und angepasst ist, dass, wenn sich der Behälter in der geschlossenen Position befindet, sein Behälterboden an zumindest einem zweiten Wirkungsbereich insbesondere entlang der Längsachse des Behälters in der Richtung des Behälterinneren im Ausmaß zumindest eines zweiten Durchbiegungsbereichs, der ein zweites Durchbiegungsmaximum umfasst, gedrückt werden kann, insbesondere in einer reversiblen Weise;
wobei der Abstand zwischen dem Behälterdeckel, insbesondere dem ersten Wirkungsbereich, in der geschlossenen Behälterposition und der Oberseite der oberen Produktplatte des Stapels oder der Abstand zwischen dem Behälterdeckel, insbesondere dem ersten Wirkungsbereich, in der geschlossenen Behälterposition und der zweiten Schutzschicht kleiner ist als der erste Durchbiegungsbereich oder das erste Durchbiegungsmaximum, insbesondere wenn der Produktplattenstapel auf dem Behälterboden oder auf der dritten Schutzschicht liegt, und/oder
wobei der Abstand zwischen dem Behälterboden, insbesondere dem zweiten Wirkungsbereich, in der geschlossenen Behälterposition und der Unterseite der untersten Produktplatte des Stapels oder der Abstand zwischen dem Behälterboden, insbesondere dem zweiten Wirkungsbereich, in der geschlossenen Behälterposition und der dritten Schutzschicht kleiner ist als der zweite Durchbiegungsbereich oder das zweite Durchbiegungsmaximum, insbesondere wenn der Produktplattenstapel auf dem Behälterdeckel oder auf der zweiten Schutzschicht liegt, und/oder
wobei der Abstand zwischen dem Behälterboden, insbesondere dem zweiten Wirkungsbereich, in der geschlossenen Behälterposition und der Unterseite der untersten Produktplatte des Stapels oder der Abstand zwischen dem Behälterboden, insbesondere dem zweiten Wirkungsbereich, in der geschlossenen Behälterposition und der dritten Schutzschicht und der Abstand zwischen dem Behälterdeckel, insbesondere dem ersten Wirkungsbereich, in der geschlossenen Behälterposition und der Oberseite der oberen Produktplatte des Stapels oder der Abstand zwischen dem Behälterdeckel, insbesondere dem ersten Wirkungsbereich, in der geschlossenen Behälterposition und der zweiten Schutzschicht kleiner als die Summe des ersten und des zweiten Durchbiegungsbereichs oder die Summe des ersten und des zweiten Durchbiegungsmaximums sind,
sodass bei Durchbiegen des Behälterdeckels, insbesondere des ersten Wirkungsbereichs, in der Richtung des Behälterinneren, insbesondere entlang seiner Längsachse, und/oder bei Durchbiegen des Behälterbodens, insbesondere des zweiten Wirkungsbereichs, in der Richtung des Behälterinneren, insbesondere entlang seiner Längsachse, zumindest eine Produktplatte, insbesondere alle Produktplatten, entlang zumindest einer, insbesondere im Wesentlichen aller der Schwächungsnuten in einzelne Stücke teilbar ist bzw. sind oder geteilt wird bzw. werden.

2. Behälter nach Anspruch 1, **dadurch gekennzeichnet, dass** der obere Teil des Behälters, insbesondere der Behälterdeckel, und/oder der untere Teil des Behälters, insbesondere der Behälterboden, Kunststoff und/oder Metall, insbesondere Kunststoff- und/oder Metalllagen, umfasst oder aus solchen gefertigt sind.

3. Behälter nach Anspruch 1 oder 2, dadurch gekenntzeichnet, dass zumindest zwei, insbesondere alle, Produktplatten in Bezug auf Länge und/oder Breite und/oder Durchmesser und/oder Dicke im Wesentlichen identisch sind.

4. Behälter nach einem der vorangehenden Ansprüche, **dadurch gekennzeichnet, dass** zumindest zwei, insbesondere alle, Produktplatten hinsichtlich Querschnitt und/oder Länge und/oder Anordnungsmuster im Wesentlichen identische Schwächungsnuten aufweisen.

5. Behälter nach einem der vorangehenden Ansprüche, **dadurch gekennzeichnet, dass** zumindest zwei, insbesondere alle Schwächungsnuten einer Produktplatte insbesondere in der Mitte der Grundform der Produktplatten zumindest einen Kreuzungsbereich aufweisen oder dass alle Schwächungsnuten einer Produktplatte einander in einem insbesondere mittleren Kreuzungsbereich der Grundform kreuzen.

6. Behälter nach einem der vorangehenden Ansprüche, **dadurch gekennzeichnet, dass** die erste Seitenwand und/oder der erste Rand ein erstes Haltemittel umfassen oder darstellen und/oder dass die zweite Seitenwand und/oder der zweite Rand ein zweites Haltemittel umfassen oder darstellen.

7. Behälter nach einem der vorangehenden Ansprüche, **dadurch gekennzeichnet, dass** der obere Teil des Behälters den Behälter in der ersten Position schließt und den Behälter in der zweiten Position freigibt, wobei in der ersten Position die erste Seitenwand und/oder der erste Rand und/oder das erste Haltemittel einen Formschluss mit dem unteren Teil des Behälters, insbesondere mit der zweiten Seitenwand und/oder dem zweiten Rand und/oder dem zweiten Haltemittel aufweisen,
dass der obere Teil des Behälters bei einer ersten Durchbiegung insbesondere des ersten Wirkungsbereichs in der Richtung des Behälterinneren, insbesondere entlang seiner Längsachse, aus der ersten in die zweite Position gebracht werden kann, sodass der Formschluss insbesondere reversibel gelöst wird,
und/oder dass der untere Teil des Behälters den Behälter in einer ersten Position schließt und den Behälter in der zweiten Position freigibt, wobei in der ersten Position die zweite Seitenwand und/oder der zweite Rand und/oder das zweite Haltemittel einen Formschluss mit dem oberen Teil des Behälters, insbesondere mit seiner ersten Seitenwand und/oder seinem ersten Rand und/oder dem ersten Haltemittel aufweisen, und
dass der untere Teil des Behälters bei einer zweiten Durchbiegung insbesondere des zweiten Wirkungsbereichs in der Richtung des Behälterinneren, insbesondere entlang seiner Längsachse, aus der ersten in die zweite Position gebracht werden kann, sodass der Formschluss insbesondere reversibel gelöst wird.

8. Behälter nach einem der vorangehenden Ansprüche, **dadurch gekennzeichnet, dass** bei Durchbiegen des Behälterdeckels, insbesondere des ersten Wirkungsbereichs, in der Richtung des Behälterinneren insbesondere entlang seiner Längsachse über den ersten Durchbiegungsbereich insbesondere bis zum ersten Durchbiegungsmaximum oder dass bei Durchbiegen des Behälterbodens, insbesondere des zweiten Wirkungsbereichs, in der Richtung des Behälterinneren insbesondere entlang seiner Längsachse über den zweiten Durchbiegungsbereich insbesondere bis zum zweiten Durchbiegungsmaximum oder
dass bei Durchbiegen des Behälterdeckels, insbesondere des ersten Wirkungsbereichs, in der Richtung des Behälterinneren insbesondere entlang seiner Längsachse über den ersten Durchbiegungsbereich insbesondere bis zum ersten Durchbiegungsmaximum und dass bei Durchbiegen des Behälterbodens, insbesondere des zweiten Wirkungsbereichs, in der Richtung des Behälterinneren insbesondere entlang seiner Längsachse über den zweiten Durchbiegungsbereich insbesondere bis zum zweiten Durchbiegungsmaximum
zumindest eine Produktplatte, insbesondere alle Produktplatten, entlang zumindest einer, insbesondere im Wesentlichen aller, der Schwächungsnuten in einzelne Stücke teilbar ist bzw. sind oder geteilt wird bzw. werden.

9. Behälter nach einem der vorangehenden Ansprüche, **dadurch gekennzeichnet, dass** der erste Wirkungsbereich zumindest eine teilweise Überlappung mit dem Bereich, in dem die Schwächungsnuten einer, mehrerer oder aller Produktplatten einander kreuzen, aufweist und/oder dass der zweite Wirkungsbereich zumindest eine teilweise Überlappung mit dem Bereich, in dem die Schwächungsnuten einer, mehrerer oder aller Produktplatten einander kreuzen, aufweist.

10. Behälter nach Anspruch 9, **dadurch gekennzeichnet, dass** der Bereich, in dem die Schwächungsnuten einander kreuzen, zumindest eine teilweise Überlappung mit der Mitte der Grundform der Produktplatte bzw. -platten aufweist.

11. Behälter nach einem der Ansprüche 5 bis 10, **dadurch gekennzeichnet, dass** die insbesondere im mittleren Bereich der Grundfonn befindlichen Kreuzungsbereiche der Schwächungsnuten benachbarter Produktplatten, insbesondere aller Produktplatten, in einem Stapel im Wesentlichen in einer überlappenden Weise angeordnet sind.

12. Behälter nach einem der vorangehenden Ansprüche, **dadurch gekennzeichnet, dass** die zumindest eine Schwächungsnut, insbesondere alle Schwächungsnuten, benachbarter, insbesondere aller, Produktplatten in einem Stapel im Wesentlichen in überlappender Weise angeordnet sind.

13. Behälter nach einem der vorangehenden Ansprüche, **dadurch gekennzeichnet, dass** die Grundform des Behälters und die Grundform der Produktplatten, insbesondere des Produktplattenstapels, im Wesentlichen identisch sind.

14. Behälter nach einem der vorangehenden Ansprüche, **dadurch gekennzeichnet, dass** die erste und/oder dritte Schutzschicht eine Papierlage darstellen oder umfassen und/oder dass die zweite und/oder die dritte Schutzschicht, insbesondere nur die zweite Schutzschicht, eine wattierte oder gepolsterte Schicht, insbesondere eine gepolsterte Papierschicht, darstellen oder umfassen.

15. Behälter nach einem der vorangehenden Ansprüche, **dadurch gekennzeichnet, dass** die Abmessung der Grundform des Behälters und die Abmessung der Grundform des Produktplattenstapels einen Abstand bereitstellen, sodass bei Durchbiegung des oberen Teils, insbesondere des Behälterdeckels, und/oder des unteren Teils, insbesondere des Behälterbodens, eine seitliche Bewegung der entlang ihrer Schwächungsnut bzw. -nuten gespaltenen einzelnen Stücke ermöglicht wird.

16. Behälter nach einem der vorangehenden Ansprüche, **dadurch gekennzeichnet, dass** die Flanken (20, 22) der Schwächungsnuten geneigt sind und im Durchschnitt einen Winkel im Bereich von 5° - 60°, insbesondere im Bereich von 25° - 45° und weiter insbesondere im Bereich von 30° - 40° ausbilden und/oder dass die größte Breite der Schwächungsnuten im Durchschnitt im Bereich von 3 - 9 mm, insbesondere im Bereich von 4 - 8 mm und weiter bevorzugt im Bereich von 6 - 7 mm liegt und/oder dass die Tiefe der Schwächungsnuten im Durchschnitt im Bereich von 2 - 6 mm, insbesondere im Bereich von 2,5 - 5 mm und weiter bevorzugt im Bereich von 3 - 4 mm liegt, und/oder dass die Dicke der Produktplatte im Durchschnitt im Bereich von 8 - 20 mm, insbesondere im Bereich von 8 - 14 mm und weiter bevorzugt im Bereich von 10,5 - 12 mm liegt und/oder dass der Durchmesser einer kreisförmige Produktplatte im Bereich von 50 - 150 mm, insbesondere im Bereich von 60 - 120 mm und weiter bevorzugt im Bereich von 70 - 100 mm liegt; und/oder wobei die Tiefe der Schwächungsnuten im Durchschnitt 10 - 60 %, insbesondere 20 - 50 % und weiter bevorzugt 25 - 45 % der Dicke der Produktplatte beträgt.

17. Verwendung des Behälters nach einem der vorangehenden Ansprüche, insbesondere nach einem der Ansprüche 7 bis 16, zur Spaltung einer Mehrzahl von Schwächungsnuten umfassenden Produktplatten in einzelne Stücke, insbesondere Schokoladenriegel, wobei die Produktplatte bzw. -platten während des Spaltungsprozesses im Behälter gehalten werden, wobei die Mehrzahl von Produktplatten in einem Stapel angeordnet ist.

18. Prozess zur Spaltung einer Mehrzahl von Produktplatten, insbesondere Schokoladenriegeln, entlang Schwächungsnuten in den Produktplatten in einzelne Stücke, umfassend: Bereitstellen eines Behälters nach einem der Ansprüche 1 bis 16, beispielsweise einer Clic-Clac-Box; Anordnen einer Mehrzahl von Produktplatten, insbesondere einer Mehrzahl von Schokaladenriegeln, wovon eine zumindest eine(r), insbesondere zumindest zwei Schwächungsnuten umfasst, wobei die Mehrzahl von Produktplatten in einem Stapel im Behälter bzw. in der Box angeordnet ist, Durchbiegen des oberen Teils, insbesondere des Deckels, des Behälters bzw. der Box insbesondere im ersten Wirkungsbereich und/oder Durchbiegen des unteren Teils, insbesondere des Behälterbodens, des Behälters bzw. der Box insbesondere im zweiten Wirkungsbereich in einer derartigen Weise, dass der obere Teil des Behälters bzw. der Box, insbesondere der Behälterdeckel, in der Richtung des Behälterinneren insbesondere entlang seiner Längsachse durchgebogen wird, und/oder in einer derartigen Weise, dass der untere Teil des Behälters bzw. der Box, insbesondere der Boden des Behälters bzw. der Box, in der Richtung des Behälter- bzw. Boxinneren insbesondere entlang seiner Längsachse durchgebogen wird, dadurch Spalten der Produktplatten entlang der Schwächungsnuten in einzelne Stücke.

## Revendications

1. Récipient (24) rempli, en particulier boîte, pour recevoir et séparer une pluralité de plaques de produit, en particulier une pluralité de tablettes de chocolat (2), dont au moins une contient au moins une rainure d'affaiblissement (4), ladite pluralité de plaques de produit étant disposée en une pile, ladite plaque ou lesdites plaques de produit étant adaptée(s) pour être séparée(s) le long de ladite rainure d'affaiblissement ou desdites rainures d'affaiblissement en morceaux séparés (44) ; ledit récipient comportant un axe longitudinal (A);
ledit récipient pouvant être amené à passer d'une première position fermée à une seconde position ouverte ;
ledit récipient comprenant
une partie supérieure comprenant un couvercle de récipient (30) et, reliée audit couvercle de récipient, une première paroi latérale (32) comportant un premier rebord, et
une partie inférieure (28) correspondante comprenant un fond de récipient (40) et, reliée audit fond de récipient, une seconde paroi latérale comportant un second rebord ;
une pluralité de plaques de produit, à l'intérieur dudit récipient, comportant chacune une face supérieure (14) et une face inférieure (18) opposée, disposées en une pile, lesdites plaques de produit comportant, en particulier située sur leur faces supérieures, au moins une rainure d'affaiblissement, en particulier droite, en particulier une pluralité de rainures d'affaiblissement ;
la face supérieure de ladite plaque de produit supérieure ou la face supérieure de toutes les plaques de produit de la pile de plaques de produit étant orientée vers le couvercle de récipient et la face inférieure de la plaque de produit la plus basse ou la face inférieure de toutes les plaques de produit de ladite pile étant orientée vers le fond de récipient ;
facultativement au moins une première couche protectrice (38) entre des plaques de produit adjacentes de ladite pile et/ou au moins une deuxième couche protectrice (36) entre le couvercle de récipient et la face supérieure de la plaque de produit supérieure de ladite pile et/ou au moins une troisième couche protectrice (42) entre la face inférieure de la plaque de produit la plus basse dans ladite pile et ledit fond de récipient ;
ladite pluralité de plaques de produit étant séparable en morceaux individuels le long desdites rainures d'affaiblissement ;
ladite partie supérieure du récipient étant disposée et adaptée, en particulier en ce qui concerne la forme, l'épaisseur et/ou le matériau, de telle manière que son couvercle de récipient peut être poussé quand le récipient est dans la position fermée au moins sur une première zone de manoeuvre (34), en particulier le long de l'axe longitudinal dudit récipient, en direction de l'intérieur dudit récipient jusqu'à au moins une première plage de fléchissement comprenant un premier maximum de fléchissement, en particulier de manière réversible, et/ou
ladite partie inférieure du récipient étant disposée et adaptée, en particulier en ce qui concerne la forme, l'épaisseur et/ou le matériau, de telle manière que son fond de récipient peut être poussé quand le récipient est dans la position fermée au moins sur une seconde zone de manoeuvre, en particulier le long de l'axe longitudinal dudit récipient, en direction de l'intérieur dudit récipient jusqu'à au moins une seconde plage de fléchissement comprenant un second maximum de fléchissement, en particulier de manière réversible ;
la distance entre le couvercle de récipient, en particulier ladite première zone de manoeuvre, dans la position fermée du récipient, et la face supérieure de ladite plaque de produit supérieure de ladite pile ou la distance entre le couvercle de récipient, en particulier ladite première zone de manoeuvre, dans la position fermée du récipient, et ladite deuxième couche protectrice étant inférieure à ladite première plage de fléchissement ou ledit premier maximum de fléchissement, en particulier quand la pile de plaques de produit repose sur ledit fond de récipient ou sur ladite troisième couche protectrice, et/ou
la distance entre le fond de récipient, en particulier ladite seconde zone de manoeuvre, dans la position fermée du récipient, et la face inférieure de la plaque de produit la plus basse de ladite pile ou la distance entre le fond de récipient, en particulier ladite seconde zone de manoeuvre, dans la position fermée du récipient, et ladite troisième couche protectrice étant inférieure à ladite seconde plage de fléchissement ou ledit second maximum de fléchissement, en particulier quand la pile de plaques de produit repose sur ledit couvercle de récipient ou sur ladite seconde couche protectrice, et/ou
la distance entre le fond de récipient, en particulier ladite seconde zone de manoeuvre, dans la position fermée du récipient, et la face inférieure de la plaque de produit la plus basse de ladite pile ou la distance entre le fond de récipient, en particulier ladite seconde zone de manoeuvre, dans la position fermée du récipient, et ladite troisième couche protectrice et la distance entre le couvercle de récipient, en particulier ladite première zone de manoeuvre, dans la position fermée du récipient, et la face supérieure de ladite plaque de produit supérieure de ladite pile ou la distance entre le couvercle de récipient, en particulier ladite première zone de manoeuvre, dans la position fermée du récipient, et la seconde couche protectrice étant inférieure à la somme desdites première et seconde pilages de fléchissement ou à la somme desdits premier et second maxima de fléchissement,
de telle sorte que, lors du fléchissement dudit couvercle de récipient, en particulier de ladite première zone de manoeuvre, en direction de l'intérieur dudit récipient, en particulier le long de son axe longitudinal, et/ou que lors du fléchissement dudit fond de récipient, en particulier de ladite seconde zone de manoeuvre, en direction de l'intérieur dudit récipient, en particulier le long de son axe longitudinal, au moins une plaque de produit, en particulier toutes les plaques de produit, sont séparables ou séparées en morceaux individuels le long d'au moins une, en particulier essentiellement de toutes les rainures d'affaiblissement.

2. Récipient selon la revendication 1, **caractérisé en ce que** la partie supérieure dudit récipient, en particulier ledit couvercle de récipient, et/ou la partie inférieure dudit récipient, en particulier ledit fond de récipient, comprend du ou est constituée de plastique et/ou métal, en particulier de feuilles de plastique et/ou métal.

3. Récipient selon la revendication 1 ou 2, **caractérisé en ce qu'**au moins deux, en particulier toutes les plaques de produit sont sensiblement identiques en termes de longueur et/ou de largeur et/ou de diamètre et/ou d'épaisseur.

4. Récipient selon l'une quelconque des revendications précédentes, **caractérisé en ce qu'**au moins deux, en particulier toutes les plaques de produit présentent des rainures d'affaiblissement sensiblement identiques en ce qui concerne la forme de la section transversale et/ou la longueur et/ou le motif de la disposition.

5. Récipient selon l'une quelconque des revendications précédentes, **caractérisé en ce qu'**au moins deux, en particulier toutes les rainures d'affaiblissement d'une plaque de produit comportent au moins une zone de croisement, en particulier au centre de la forme de base des plaques de produit, ou **en ce que** toutes les rainures d'affaiblissement d'une plaque de produit se croisent dans une zone de croisement, en particulier centrale, de la forme de base.

6. Récipient selon l'une quelconque des revendications précédentes, **caractérisé en ce que** ladite première paroi latérale et/ou ledit premier rebord comprennent ou représentent un premier moyen de retenue et/ou **en ce que** ladite seconde paroi latérale et/ou ledit second rebord comprennent ou représentent un second moyen de retenue.

7. Récipient selon l'une quelconque des revendications précédentes, **caractérisé en ce que** la partie supérieure du récipient ferme le récipient dans ladite première position et débloque ledit récipient dans ladite seconde position, ladite première paroi latérale et/ou ledit premier rebord et/ou ledit premier moyen de retenue présentant, dans ladite première position, une liaison de forme avec ladite partie inférieure du récipient, en particulier avec ladite seconde paroi latérale et/ou ledit second rebord et/ou ledit second moyen de retenue,
**en ce que** ladite partie supérieure du récipient peut être amenée à passer de ladite première à ladite seconde position lors d'un premier fléchissement, en particulier de ladite première zone de manoeuvre, en direction de l'intérieur dudit récipient, en particulier le long de son axe longitudinal, de telle sorte que ladite liaison de forme est libérée, en particulier de manière réversible,
et/ou **en ce que** la partie inférieure du récipient ferme ledit récipient dans une première position et débloque ledit récipient dans ladite seconde position, ladite seconde paroi latérale et/ou ledit second rebord et/ou ledit second moyen de retenue présentant, dans ladite première position, une liaison de forme avec ladite partie supérieure du récipient, en particulier avec sa première paroi latérale et/ou son premier rebord et/ou ledit second moyen de retenue, et
**en ce que** ladite partie inférieure du récipient peut être amenée à passer de ladite première à ladite seconde position lors d'un second fléchissement, en particulier de ladite seconde zone de manoeuvre, en direction de l'intérieur dudit récipient, en particulier le long de son axe longitudinal, de telle sorte que ladite liaison de forme est libérée, en particulier de manière réversible.

8. Récipient selon l'une quelconque des revendications précédentes, **caractérisé en ce que**,
lors du fléchissement dudit couvercle de récipient, en particulier de ladite première zone de manoeuvre, en direction de l'intérieur dudit récipient, en particulier le long de son axe longitudinal, sur ladite première plage de fléchissement, en particulier jusqu'au dit premier maximum de fléchissement, ou **en ce que**, lors du fléchissement dudit fond de récipient, en particulier de ladite seconde zone de manoeuvre, en direction de l'intérieur dudit récipient, en particulier le long de son axe longitudinal, sur ladite seconde plage de fléchissement, en particulier jusqu'au dit second maximum de fléchissement, ou
**en ce que**, lors du fléchissement dudit couvercle de récipient, en particulier de ladite première zone de manoeuvre, en direction de l'intérieur dudit récipient, en particulier le long de son axe longitudinal, sur ladite première plage de fléchissement, en particulier jusqu'au dit premier maximum de fléchissement, et **en ce que**, lors du fléchissement dudit fond de récipient, en particulier de ladite seconde zone de manoeuvre, en direction de l'intérieur dudit récipient, en particulier le long de son axe longitudinal, sur ladite seconde plage de fléchissement, en particulier jusqu'au dit second maximum de fléchissement,
au moins une plaque de produit, en particulier toutes les plaques de produit, sont séparables ou séparées en morceaux individuels le long d'au moins une, en particulier essentiellement de toutes les rainures d'affaiblissement.

9. Récipient selon l'une quelconque des revendications précédentes, **caractérisé en ce que** ladite première zone de manoeuvre comporte au moins un chevauchement partiel avec la zone dans laquelle les rainures d'affaiblissement d'une, de plusieurs ou de toutes les plaques de produit se croisent, et/ou **en ce que** ladite seconde zone de manoeuvre comporte au moins un chevauchement partiel avec la zone dans laquelle les rainures d'affaiblissement d'une, de plusieurs ou de toutes les plaques de produit se croisent.

10. Récipient selon la revendication 9, **caractérisé en ce que** la zone dans laquelle les rainures d'affaiblissement se croisent comporte au moins un chevauchement partiel avec le centre de la forme de base de la plaque ou des plaques de produit.

11. Récipient selon une des revendications 5 à 10, **caractérisé en ce que** les zones de croisement, en particulier lorsqu'elles sont situées dans la zone centrale de la forme de base, des rainures d'affaiblissement de plaques de produit adjacentes, en particulier de toutes les plaques de produit, dans une pile sont sensiblement disposées de manière se chevauchant.

12. Récipient selon l'une quelconque des revendications précédentes, **caractérisé en ce que** ladite au moins une rainure d'affaiblissement, en particulier toutes les rainures d'affaiblissement, de, en particulier de toutes les, plaques de produit adjacentes dans une pile sont disposées sensiblement de manière se chevauchant.

13. Récipient selon l'une quelconque des revendications précédentes, **caractérisé en ce que** la forme de base dudit récipient et la forme de base des plaques de produit, en particulier de ladite pile de plaques de produit, sont sensiblement identiques.

14. Récipient selon l'une quelconque des revendications précédentes, **caractérisé en ce que** la première et/ou la troisième couche protectrice représente/représentent ou comprend/comprennent une feuille de papier et/ou **en ce que** ladite deuxième et/ou ladite troisième couche protectrice, en particulier uniquement ladite deuxième couche protectrice, représente/représentent ou comprend/comprennent une couche rembourrée ou amortie, en particulier une couche rembourrée en papier.

15. Récipient selon l'une quelconque des revendications précédentes, **caractérisé en ce que** les dimensions de la forme de base du récipient et les dimensions de la forme de base de la pile de plaques de produit assurent un espace libre de telle sorte que, lors du fléchissement de la partie supérieure, en particulier du couvercle de récipient, et/ou de la partie inférieure, en particulier du fond de récipient, un mouvement latéral des morceaux individuels séparés le long de leur rainure ou leurs rainures d'affaiblissement est permis.

16. Récipient selon l'une quelconque des revendications précédentes, **caractérisé en ce que** les flancs (20, 22) desdites rainures d'affaiblissement sont inclinés et forment en moyenne un angle dans la plage de 5° à 60°, en particulier dans la plage de 25° à 45°, et plus particulièrement dans la plage de 30° à 40°, et/ou **en ce que** la largeur la plus grande des rainures d'affaiblissement est en moyenne dans la plage de 3 à 9 mm, en particulier dans la plage de 4 à 8 mm, et de manière plus préférentielle dans la plage de 6 à 7 mm, et/ou **en ce que** la profondeur des rainures d'affaiblissement est en moyenne dans la plage de 2 à 6 mm, en particulier dans la plage de 2,5 à 5 mm, et de manière plus préférentielle dans la plage de 3 à 4 mm, et/ou **en ce que** l'épaisseur des plaques de produit est en moyenne dans la plage de 8 à 20 mm, en particulier dans la plage de 8 à 14 mm, et de manière plus préférentielle dans la plage de 10,5 à 12 mm, et/ou **en ce que** le diamètre d'une plaque de produit circulaire est dans la plage de 50 à 150 mm, en particulier dans la plage de 60 à 120 mm, et de manière plus préférentielle dans la plage de 70 à 100 mm ; et/ou la profondeur de rainures d'affaiblissement étant en moyenne de 10 à 60 %, en particulier de 20 à 50 %, et de manière plus préférentielle de 25 à 45 % de l'épaisseur de la plaque de produit.

17. Utilisation du récipient selon l'une quelconque des revendications précédentes, en particulier selon une des revendications 7 à 16, pour séparer une pluralité de plaques de produit, en particulier de barres de chocolat, comprenant des rainures d'affaiblissement, en morceaux individuels, ladite plaque ou lesdites plaques de produit étant conservée(s) dans ledit récipient pendant ledit processus de séparation, ladite pluralité de plaques de produit étant disposée en une pile.

18. Procédé de séparation d'une pluralité de plaques de produit, en particulier de barres de chocolat, en morceaux individuels le long de rainures d'affaiblissement dans lesdites plaques de produit comprenant :
la mise à disposition d'un récipient selon une des revendications 1 à 16, par exemple une boîte clic clac, le placement d'une pluralité de plaques de produit, en particulier d'une pluralité de barres de chocolat, dont au moins une contient au moins une, en particulier au moins deux rainures d'affaiblissement, ladite pluralité de plaques de produit étant disposée en une pile, dans ledit récipient ou ladite boîte,
le fléchissement de la partie supérieure, en particulier du couvercle, dudit récipient ou de ladite boîte, en particulier dans la première zone de manoeuvre, et/ou le fléchissement, de la partie inférieure, en particulier du fond de récipient, dudit récipient ou de ladite boîte, en particulier dans ladite seconde zone de manoeuvre, de telle manière que ladite partie supérieure du récipient ou de la boîte, en particulier le couvercle de boîte, est fléchie en direction de l'intérieur dudit récipient, en particulier le long de son axe longitudinal, et/ou de telle manière que la partie inférieure dudit récipient ou de ladite boîte, en particulier le fond de récipient dudit récipient ou de ladite boîte, est fléchie en direction de l'intérieur dudit récipient ou de ladite boîte, en particulier le long de son axe longitudinal, séparant ainsi les plaques de produit en morceaux individuels le long desdites rainures d'affaiblissement.
